# NEUE EUROPÄISCHE PATENTSCHRIFT

(11) **EP 2 686 629 B2**
(45) Veröffentlichungstag und Bekanntmachung des Hinweises auf die Entscheidung über den Einspruch: **03.11.2021**
(45) Hinweis auf die Patenterteilung: 15.04.2015
(21) Anmeldenummer: 12706466.5
(22) Anmeldetag: 23.02.2012
(51) Int. Cl.: F26B 3/084, F26B 17/10, F26B 23/00, B29B 13/06, C08F 6/00, F26B 23/10

(54) **VERFAHREN ZUR TROCKNUNG VON FEUCHTEM POLYMERPULVER**
METHOD FOR DRYING A HUMID POLYMER POWDER
PROCÉDÉ POUR LE SÉCHAGE D'UNE POUDRE DE POLYMÈRE HUMIDE

(30) Priorität: 15.03.2011 DE 102011014131
(43) Veröffentlichungstag der Anmeldung: 22.01.2014
(73) Patentinhaber: thyssenkrupp Industrial Solutions AG, 45143 Essen (DE); Vinnolit GmbH & Co. KG, 84508 Burgkirchen (DE)
(72) Erfinder: BENJE, Michael, 65812 Bad Soden (DE); KAMMERHOFER, Peter, 84508 Burgkirchen (DE)
(74) Vertreter: Wolff, Felix
(86) Internationale Anmeldenummer: PCT/EP2012/000773
(87) Internationale Veröffentlichungsnummer: WO 2012/123063

(56) Entgegenhaltungen:
- WO-A1-2010/034392
- WO-A2-2008/127709
- DE-A1- 3 445 437
- DE-A1- 4 132 591
- FR-A1- 2 879 608

## Beschreibung

Die Erfindung betrifft eine Vorrichtung sowie ein Verfahren zur Trocknung von feuchtem Polymerpulver.

Bei der Herstellung von Polymeren fallen häufig feuchte Polymerpulver an, die in nachgeschalteten Trocknungsstufen behandelt werden. Die Trocknung von Polymerpulvern wird bereits seit langem praktiziert. Dafür werden unterschiedlichste Apparate eingesetzt, beispielsweise Trommel-, Schnecken- oder Wirbelschichttrockner sowie Vorrichtung zur Sprühtrocknung.

So beschreibt beispielsweise DE 602 12 652 T2 ein Verfahren zur Entwässerung und Entgasung von Polymerpulvern durch Einsatz eines Extruders.

DE 10 2007 020 951 A1 offenbart ein Verfahren und eine Vorrichtung zur Reinigung eines resorbierbaren Polyesters. Dabei wird eine feuchte Polymermasse unter Einsatz eines Wirbelschichttrockners getrocknet.

DE 696 33 192 T2 beschreibt ein Verfahren und eine Vorrichtung zur Trocknung von pulverisiertem Material, welches in einem zylinderförmigen Rohr auf Spiralbahnen geführt wird.

DE 42 40 716 A1 offenbart ein Verfahren zum Trocknen von Vinylchlorid-Polymerisaten durch konvektive Gleichstromtrocknung. Das Verfahren ist durch den Einsatz eines Stromrohres und einer unmittelbar daran anschließenden Zyklontrockner-Einheit ohne zusätzliche Kontaktbeheizung gekennzeichnet.

Aus DE 30 34 983 A1 ist ein Verfahren zur thermischen Nachbehandlung von verpastbaren Polymerisaten des Vinylchlorids bekannt. Die erhaltenen Polymeremulsionen werden dabei einer Sprühtrocknung unterzogen.

Es sind auch bereits Wirbelschichtgranuliertrockner beschrieben worden, bei denen ein Teil der im Prozess erzeugten Wärme rückgewonnen wird, um das Verfahren insgesamt effizienter zu gestalten. Eine derartige Vorrichtung ist aus DE 34 45 437 A1 bekannt.

Viele chemische Reaktionen, so auch Polymerisationsreaktionen oder Verfahren zur Herstellung von dafür benötigten Monomeren, sind exotherm. Eine Nutzung der bei der chemischen Umsetzung anfallenden Reaktionswärme oder auch der Abwärme von Aufarbeitungsprozessen bei der Herstellung solcher Verbindungen würde die Energieeffizienz der Herstellungsverfahren verbessern. Häufig stellt sich aber das Problem, dass die Abwärme auf einem für die Nutzung zu niedrigen Temperaturniveau anfällt.

1,2-Dichlorethan (nachstehend "DCE") wird überwiegend als Zwischenprodukt der Herstellung von monomerem Vinylchlorid (nachstehend "VC") verwendet, welches wiederum als Zwischenprodukt für die Herstellung von Polyvinylchlorid (nachstehend "PVC") eingesetzt wird. Bei der Umsetzung von DCE zu monomerem Vinylchlorid entsteht Chlorwasserstoff HCl. Dieser wird bevorzugt bei der Herstellung von DCE durch Oxychlorierung von Ethen mittels HCl und Sauerstoff eingesetzt. Ein alternativer Herstellungsweg von DCE führt über die Direktchlorierung von Ethen mittels Chlor. Bei der großtechnischen Herstellung von DCE werden beide Wege beschritten, so dass hinsichtlich des erzeugten und verbrauchten Chlorwasserstoffs eine ausgewogene Bilanz entsprechend den folgenden Reaktionsgleichungen erreicht wird:

Cl₂ + C₂H₄ → C₂H₄Cl₂ + 218 kJ/Mol

C₂H₄Cl₂ → C₂H₃Cl + HCl - 71 kJ/Mol

C₂H₄ + 2 HCl + ½O₂ → C₂H₄Cl₂ + H₂O + 238 kJ/Mol

Die Gesamtbilanz der DCE-Reaktion ist exotherm. Häufig werden DCE-Anlagen mit Anlagen zur VC-Herstellung und zur PVC-Erzeugung gekoppelt.

Das bei der PVC-Herstellung anfallende Polymere ist häufig feucht, insbesondere wenn die Polymerisation als Emulsions- oder Suspensionspolymerisation ausgeführt wird. Das Polymerpulver muss daher nach der Herstellung und Abtrennung überschüssiger Flüssigkeit getrocknet werden. Oft werden hierfür Wirbelschichttrockner eingesetzt.

Es wurde jetzt gefunden, dass die bei der Herstellung sowie der Aufarbeitung von 1,2-Dichlorethan anfallende thermische Energie sich gut zum Betrieb von Trocknungsvorrichtungen von Polymerpulvern eignet.

In der FR 2 879 608 A wird ein Verfahren zur Trocknung eines feuchten Polymerpulvers beschrieben, wobei der hierfür verwendete Trockner mindestens ein Heizelement enthält, das mit Niederdruckdampf beheizt wird. Dieses Dokument offenbart die Beheizung dieser Heizelemente mit Niederdruckdampf, wobei die Einstellung der für eine produktschonende Fahrweise der Trocknungsvorrichtung erforderlichen niedrigen Temperaturen bzw. der dazu korrespondierende Dampfdrucke im Vakuumbereich durch eine apparativ und regelungstechnisch sehr aufwendige Vorrichtung bewerkstelligt wird.

Aufgabe der vorliegenden Erfindung ist die Bereitstellung eines verbesserten Trocknungsverfahrens für Polymerpulver sowie einer dafür geeigneten Vorrichtung, die sich durch eine besonders hohe Energieeffizienz auszeichnen.

Die Erfindung betrifft ein Verfahren zur Trocknung von Polymerpulvern gemäß Anspruch 1.

Bevorzugte Ausführungsformen des erfindungsgemäßen Verfahrens ergeben sich aus dem Unteranspruch.

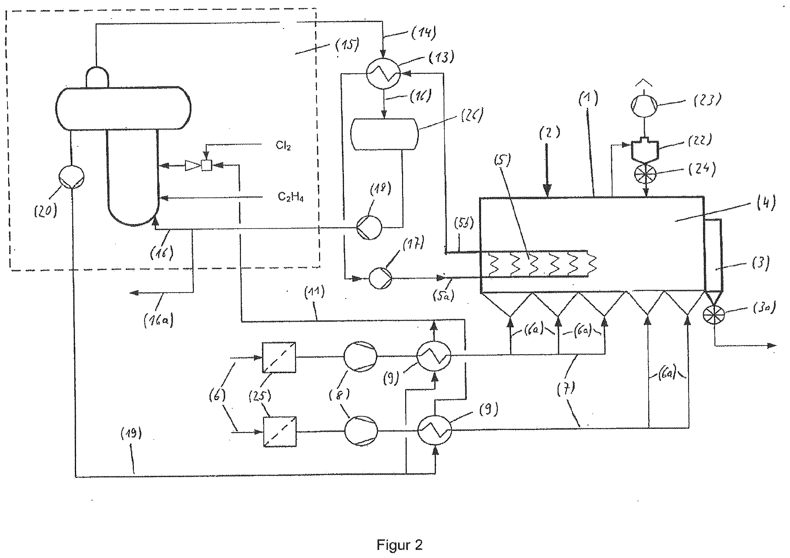

Wie aus der nachstehend beschriebenen Figur 2 ersichtlich ist, wird der als Trocknungsvorrichtung eingesetzte Wirbelschichttrockner einerseits mit Heizregistern beheizt, die von heißem Wasser, durchströmt werden. Andererseits wird das Fluidisierungsgas, nämlich Luft, selbst mittels heißem Fluid, vorgewärmt.

Die Trocknung findet bei moderaten Temperaturen statt. So beträgt die Vorlauftemperatur des für die Wärmeregister verwendeten Heisswassers typischerweise zwischen 80 und 105°C, vorzugsweise ca. 96 °C. Das Fluidisierungsgas wird ebenfallls typischerweise auf Temperaturen im Bereich zwischen 80 und 110°C, vorzugsweise auf ca. 96 °C, vorgewärmt.

Das Temperaturniveau dieser Wärmesenken ist sehr gut geeignet, um mit der Reaktionswärme einer oder beider exothermer Reaktionen des DCE-Prozesses beheizt zu werden. Besonders geeignet ist hier die Direktchlorierung.

Es kann aber auch die Reaktionswärme der Oxichlorierung verwendet werden.

Natürlich müssen sich die Anlagen zur Direktchlorierung oder zur Oxichlorierung nicht in einem Verbund mit einer Anlage zur Herstellung von Vinylchlorid befinden, sondern können auch für sich alleine stehen.

Besonders bevorzugt wird eine Verfahrensweise, bei der mittels der Reaktionswärme der Direktchlorierung oder der Oxichlorierung ein Wämeträgerkreislauf beheizt wird, dessen Vorlauftemperatur schon auf für die Wirbelschichttrocknung von PVC geeignete Werte eingestellt wird.

Im erfindungsgemäßen Verfahren erfolgt das Beheizen der Wärmetauscher (9) durch ein heißes Fluid (5a, 10, 19) welches wiederum mit thermischer Energie aus einer Anlage zur Herstellung von 1,2-Dichlorethan (15) und/oder zur Herstellung von Vinylchlorid aus 1,2-Dichlorethan erhitzt worden ist. Dabei kann es sich um eine heiße Reaktionskomponente oder eine andere erhitzte Fluidkomponente aus der Anlage zur Herstellung von 1,2-Dichlorethan oder zur Herstellung von Vinylchlorid handeln, beispielsweise um heißes 1,2-Dichlorethan, oder es handelt sich um ein mit thermischer Energie aus der Anlage zur Herstellung von 1,2-Dichlorethan oder zur Herstellung von Vinylchlorid beheiztes Fluid, das vorzugsweise im Kreis gefahren wird, um die thermische Energie von der Anlage zur Trocknungsvorrichtung zu transportieren. Besonders bevorzugt wird als Fluid Wasser eingesetzt, insbesondere Wasser, das durch Wärmeaustausch mit heißem 1,2-Dichlorethan, beispielsweise mit heißem flüssigem 1,2-Dichlorethan oder mit heißem, kondensierendem, dampfförmigem 1,2-Dichlorethan, erhitzt worden ist.

Vorzugsweise wird in die Wärmetauscher (9) flüssiges EDC aus den Destillationskolonnen der Anlage zur Herstellung von 1,2-Dichlorethan (15) eingeleitet, so dass die Abwärme des flüssigen 1,2-Dichlorethan zum Beheizen der Luft (6) genutzt wird.

Besonders bevorzugt wird ein Verfahren, bei dem das im Kreislauf geführte Wämeträgermedium Wasser ist.

In einer weiteren bevorzugten Verfahrensvariante wird der Wärmeträgerkreislauf mit der Abwärme von Destillationskolonnen beheizt. Das Wärmeträgermedium durchströmt dann die Kühlmittelseite des Kopfkondensators einer Kolonne. Besonders bevorzugt ist dabei ein Verfahren, bei dem die Kolonne ihrerseits mittels der Reaktionswärme der Direktchlorierung oder der Oxichlorierung beheizt wird.

Die vorliegende Erfindung betrifft auch eine Vorrichtung (1) zur Trocknung von Polymerpulvern mit Einlass (2) und Auslass (3) für das Polymerpulver mit im Innenraum (4) angebrachten Wärmeregistern (5) und mit Leitungen (7) für ein beheiztes Gas (6a) zum Trocknen des Polymerpulvers, die in den Innenraum (4) münden, wobei die Leitungen (7) mit Wärmetauschern (9) zum Beheizen eines Gases (6) verbunden sind, und wobei die Wärmeaustauscher (9) über Leitungen zusätzlich mit einer Anlage zur Herstellung von 1,2-Dichlorethan (15) und/oder zur Herstellung von Vinylchlorid aus 1,2-Dichlorethan verbunden sind, so dass thermische Energie aus der Anlage zur Herstellung von 1,2-Dichlorethan (15) und/oder zur Herstellung von Vinylchlorid zum Beheizen des Gases (6) genutzt werden kann, wobei von Heisswasser als heißem Fluid (5a) durchströmte Wärmeregister (5) mit einem Wärmetauscher (13, 30) zum Beheizen des durch das Wärmeregister (5) strömenden Fluids (5b) verbunden sind, und Wärmetauscher (13, 30) über Leitungen (11, 14) zusätzlich mit der Anlage zur Herstellung von 1,2-Dichlorethan (15) und/oder zur Herstellung von Vinylchlorid aus 1,2-Dichlorethan verbunden ist, in denen ein heißes Fluid für das Beheizen des Fluids (5b) zu- und abgeleitet wird.

Es werden Wirbelschichttrockner als Trockner eingesetzt.

Als Wärmetauscher lassen sich in dem erfindungsgemäßen Verfahren beliebige für diesen Zweck geeignete Apparate einsetzen. Beispiele dafür sind Rohrbündelwärmetauscher und ganz besonders bevorzugt Plattenwärmetauscher.

Die Erfindung zielt insbesondere auf die Beheizung eines Apparates zur Trocknung von feuchtem PVC-Pulver mittels der Reaktionswärme einer exothermen Reaktion und/oder mittels der bei der Aufarbeitung des Verfahrensproduktes entstandenen Wärme ab, die aus einem Verfahrens zur Herstellung von Vinylchlorid und/oder zur Herstellung von 1,2-Dichlorethan stammt.

Die erfindungsgemäße Vorrichtung kann aber auch für die Trocknung anderer Polymerpulver eingesetzt werden.

Ganz besonders bevorzugt zielt die Erfindung auf die Beheizung eines Wirbelschichttrockners (Fliessbetttrockners) zur Trocknung von feuchtem PVC mit der bei der Direktchlorierung von Ethylen zu 1,2-Dichlorethan entstandenen Wärme oder mit der bei der Oxichlorierung von Ethylen mit Chlorwasserstoff und Sauerstoff entstandenen Wärme ab.

Besondere Ausführungsformen der erfindungsgemäßen Vorrichtung sind in den Unteransprüchen dargestellt.

Nachfolgend wird die Erfindung anhand dreier Figuren beispielhaft näher erläutert, ohne dass dadurch eine Beschränkung beabsichtigt ist. Es zeigen:
- Fig. 1:: Skizze einer Vorrichtung sowie Verfahrens (Referenzbeispiel 1)
- Fig. 2:: Skizze einer erfindungsgemäßen Vorrichtung eingebaut in eine EDC-Anlage
- Fig. 3:: Skizze einer weiteren Vorrichtung eingebaut in eine EDC-Anlage (Referenzbeispiel 2)

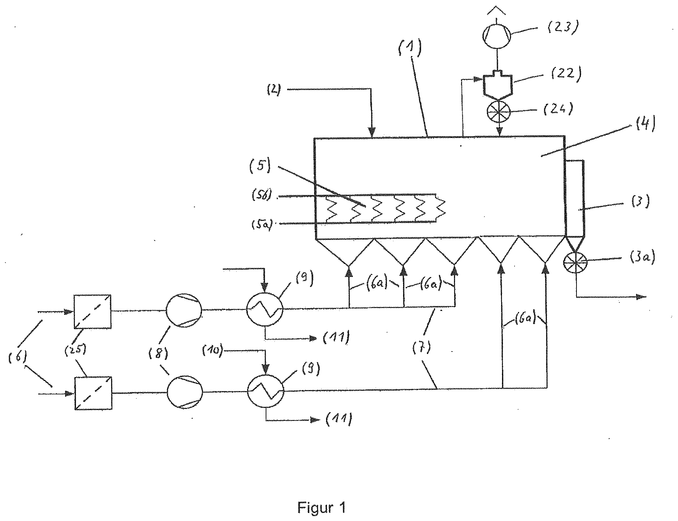

In Figur 1 ist eine Variante des erfindungsgemäßen Trockners bzw. des erfindungsgemäßen Verfahrens dargestellt. Gezeigt wird ein Wirbelschichttrockner (1) mit Einlass (2) für feuchtes Polymerpulver sowie mit Auslass (3) für getrocknetes Polymerpulver, welches aus dem Trockner über eine Zellenradschleuse (3a) ausgeschleust wird. Ebenfalls dargestellt ist ein Auslass für die im Wirbelschichttrockner (1) verwendete Luft. Dieser besteht aus einem Zyklon (22) mit nachgeschaltetem Gebläse (23) und Zellenradschleuse (24) zur Rückführung des im Zyklon (22) abgeschiedenen Polymerpulvers in den Wirbelschichttrockner (1). Im Innern wird der Wirbelschichttrockner (1) mit heißem Wasser (5a) beheizt. Die Wärme für das Erhitzen des Wassers (5a) stammt zumindest teilweise aus der Abwärme einer nicht dargestellten Anlage zur Herstellung von 1,2-Dichlorethan. Dieses wird durch im Innenraum (4) verlaufende Wärmeregister (5) geleitet; das abgekühlte Wasser (5b) wird aus dem Wärmeregister (5) abgeleitet. Die Wirbelschicht wird durch beheizte Luft (6a) erzeugt. Diese wird der unteren Seite des Wirbelschichttrockners durch Leitungen (7) zugeleitet. Gebläse (8) sorgen für einen ausreichenden Druck der Luft (6a); vor den Gebläsen (8) sind jeweils Luftfilter (25) angebracht. Die Beheizung der Luft (6) erfolgt durch Wärmetauscher (9), welche mit heißem Fluid (10) beheizt werden, das mit thermischer Energie aus einer nicht dargestellten Anlage zur Herstellung von 1,2-Dichlorethan und/oder einer Anlage zur Herstellung von Vinylchlorid erhitzt worden ist. Das abgekühlte Fluid (11) aus den Wärmetauschern (9) wird vorzugsweise rückgeführt, um erneut thermische Energie aus der Anlage zur Herstellung von 1,2-Dichlorethan bzw. aus der Anlage zur Herstellung von Vinylchlorid aufzunehmen.

In Figur 2 ist eine Verschaltung der in Figur 1 dargestellten Variante des erfindungsgemäßen Trockners bzw. des erfindungsgemäßen Verfahrens mit einer DCE-Anlage dargestellt. Wirbelschichttrockner (1) mit Einlass (2), Zyklon (22), Gebläse (23), Zellenradschleuse (24), Auslass (3), Zellenradschleuse (3a), und Wärmeregister (5) im Innenraum (4) wird wie in Figur 1 dargestellt mit beheizter Luft (6a) gespeist. Diese wird der unteren Seite des Wirbelschichttrockners (1) durch Leitungen (7) über Gebläse (8) in den Innenraum (4) eingeleitet. Die Beheizung der Wärmeregister (5) erfolgt durch Heißwasser (5a), welches durch Wärmetauscher (13) erhitzt wird und als abgekühltes Wasser (5b) das Wärmeregister verlässt, so dass Wasser zwischen Wärmeregistern (5) und Wärmetauscher (13) zirkuliert wird. Dabei wird Pumpe (17) eingesetzt. Die Wärme für das Erhitzen des Heißwassers entstammt DCE-Dampf (14) aus einer DCE-Anlage (15) (hier: einer DCE-Direktchlorierungsanlage), welches nach erfolgtem Wärmetausch als DCE-Kondensat (16) im Sammeltank (26) zwischengelagert wird und in die DCE-Anlage (15) rückgeführt wird bzw. teilweise als DCE-Produkt (16a) aus der DCE-Anlage (15) ausgeschleust wird. Dazu wird Pumpe (18) eingesetzt. Die Beheizung der Luft (6) erfolgt durch Wärmetauscher (9), welche mit flüssigem DCE (19) aus der DCE-Anlage (15) beheizt werden. Die Luft (6) wird durch Luftfilter (25) geleitet und durch Gebläse (8) den Wärmetauschern (9) zugeleitet. Das flüssige DCE (19) wird über Pumpe (20) den Wärmetauschern (9) zugeführt. Das abgekühlte DCE (11) aus den Wärmetauschern (9) wird in die DCE-Anlage (15) rückgeführt.

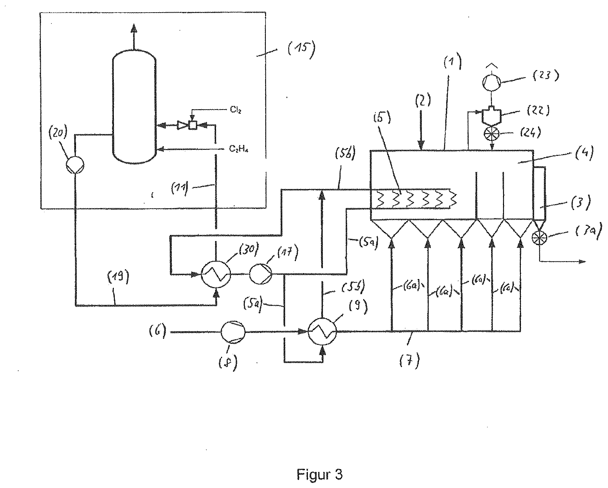

In Figur 3 ist eine weitere, besonders bevorzugte Verschaltung der in Figur 1 dargestellten Variante des erfindungsgemäßen Trockners bzw. des erfindungsgemäßen Verfahrens mit einer DCE-Anlage dargestellt. Der Aufbau entspricht demjenigen der Anlage aus Figur 2 mit der Abänderung, dass Wärmetauscher (9) für das Erhitzen der Luft (6) und Wärmetauscher (30) für das Erzeugen von Heißwasser (5a) mit heißem DCE (19) aus der DCE-Anlage (15) betrieben werden. Der Trockner (1) wird hier also mit heißem Wasser beheizt, das wiederumg mit thermischer Energie beheizt wurde, welche aus der DCE-Anlage (15) stammt. Die Ströme des Heißwassers (5a) und des abgekühlten Wassers (5b) werden dabei im Kreis geführt.

## Patentansprüche

1. Verfahren zur Trocknung von Polymerpulvern in einem Wirbelschichttrockner (1) mit den Schritten:
i) Behandlung eines Polymerpulvers mit erhitzter Luft (6a) in einem mit Einlass (2) und Auslass (3) für das Polymerpulver und mit im Innenraum (4) angebrachten Wärmeregister (5) ausgestatteten Wirbelschichttrockner (1),
ii) Zuführung von erhitzter Luft (6a) durch Leitungen (7) in den Innenraum (4) des Wirbelschichttrockners (1),
iii) Erhitzen von Luft (6) in Wärmetauschern (9) zur Erzeugung von erhitzter Luft (6a),
wobei
- das Beheizen der Wärmetauscher (9) **dadurch** erfolgt, dass in die Wärmetauscher (9) flüssiges EDC als heißes Fluid (5a, 10, 19) aus den Destillationskolonnen einer Anlage zur Herstellung von 1,2-Dichlorethan (15) eingeleitet wird, so dass die Abwärme des flüssigen 1,2-Dichlorethan zum Beheizen der Luft (6) genutzt wird,
- Wärmeregister (5) von Heißwasser als heißem Fluid (5a) durchströmt wird,
- auf der unteren Seite des Wirbelschichttrockners (1) erhitzte Luft (6a) durch Luftleitungen (7) in den Innenraum (4) eingeleitet wird, wodurch ein Verwirbeln des Polymerpulvers erfolgt,
- die Wärmeregister (5) durch Heißwasser (5a) beheizt werden, und
- das Heißwasser (5a) durch Wärmetauscher (13) und durch Verwendung eines weiteren heißen Fluids beheizt worden ist, wobei das weitere heiße Fluid aus der Anlage zur Herstellung von 1,2-Dichlorethan (15) stammt, und als abgekühltes Wasser (5b) das Wärmeregister (5) verlässt und Wärmetauscher (13) wieder zugeführt wird, so dass Wasser zwischen Wärmeregistern (5) und Wärmetauscher (13) zirkuliert wird.

2. Verfahren nach Anspruch 1, **dadurch gekennzeichnet, dass** die Anlage zur Herstellung von 1,2-Dichlorethan (15) eine Direktchlorierungsanlage oder eine Oxichlorierungsanlage ist.

## Claims

1. Method of drying polymer powders in a fluidized-bed dryer (1), which comprises the steps:
i) treatment of a polymer powder with heated air (6a) in a fluidized-bed dryer (1) equipped with inlet (2) and outlet (3) for the polymer powder and with heat registers (5) installed in the interior space (4),
ii) introduction of heated air (6a) through lines (7) into the interior space (4) of the fluidized-bed dryer (1) ,
iii) heating of air (6) in heat exchangers (9) for producing heated air (6a),
wherein
- the heating of the heat exchangers (9) is effected by introducing, into the heat exchangers (9), liquid EDC as hot fluid (5a, 10, 19) from the distillation columns of a plant for the preparation of 1,2-dichloroethane (15), so that the waste heat of the liquid 1,2-dichloroethane is utilized for heating the air (6),
- hot water as hot fluid (5a) flows through the heat register (5),
- heated air (6a) is introduced into the interior space (4) through air lines (7) on the underside of the fluidized-bed dryer (1), resulting in fluidization of the polymer powder,
- the heat registers (5) are heated by means of hot water (5a), and
- the hot water (5a) has been heated by heat exchanger (13) and by use of a further hot fluid, wherein the further hot fluid originates from the plant for the preparation of 1,2-dichloroethane (15), and leaves the heat register (5) as cooled water (5b) and is reintroduced into heat exchanger (13) so that water is circulated between heat registers (5) and heat exchanger (13) .

2. Method according to Claim 1, **characterized in that** the plant for the preparation of 1,2-dichloroethane (15) is a direct chlorination plant or an oxychlorination plant.

## Revendications

1. Procédé pour le séchage de poudres polymères dans un dispositif de séchage à lit tourbillonnant (1), comprenant les étapes de :
i) traitement d'une poudre polymère avec de l'air chauffé (6a) dans un dispositif de séchage à lit tourbillonnant (1) équipé d'une entrée (2) et d'une sortie (3) pour la poudre polymère et de registres de chaleur (5) disposés dans l'espace interne (4),
ii) introduction de l'air chauffé (6a) à travers des conduites (7) dans l'espace interne (4) du dispositif de chauffage à lit tourbillonnant (1),
iii) chauffage d'air (6) dans des échangeurs thermiques (9) pour générer de l'air chauffé (6a),
où
- le chauffage des échangeurs thermiques (9) est réalisé en ce que de l'EDC (dichloroéthane) liquide, provenant de colonnes de distillation d'une installation pour la préparation de 1,2-dichloroéthane (15), est introduit en tant que fluide chaud (5a, 10, 19) dans les échangeurs thermiques, de telle sorte que la chaleur résiduelle du 1,2-dichloroéthane liquide est utilisée pour le chauffage de l'air (6),
- le registre de chaleur (5) est traversé par de l'eau chaude en tant que fluide chaud (5a),
- sur le côté inférieur du dispositif de séchage à lit fluidisé (1), l'air chauffé (6a) est introduit à travers des conduites à air (7) dans l'espace interne (4), suite à quoi un tourbillonnement de la poudre polymère a lieu,
- les registres de chaleur (5) sont chauffés par de l'eau chaude (5a) et
- l'eau chaude (5a) a été chauffée par des échangeurs thermiques (13) et par l'utilisation d'un autre fluide chaud, l'autre fluide chaud provenant de l'installation pour la préparation de 1,2-dichloroéthane (15), et elle quitte le registre de chaleur (5) sous forme d'eau refroidie (5b) et est de nouveau introduite dans les échangeurs thermiques (13) de telle sorte que l'eau est mise en circulation entre les registres de chaleur (5) et les échangeurs thermiques (13).

2. Procédé selon la revendication 1, **caractérisé en ce que** l'installation pour la préparation de 1,2-dichloréthane (15) est une installation de chloration directe ou une installation de chloration par oxydation.
